# EUROPEAN PATENT APPLICATION

(11) **EP 0 834 679 A1**
(43) Date of publication of application: **08.04.1998**
(21) Application number: 97117147.5
(22) Date of filing: 02.10.1997
(51) Int. Cl.: F16H 59/02

(54) **Vehicle transmission control device**

(30) Priority: 04.10.1996 IT TO960810
(71) Applicant: ROLTRA MORSE S.p.A., 86077 Pozzilli (IT)
(72) Inventor: Ottino, Franco Giovanni, 56017 San Giuliano Terme (IT)
(74) Representative: Franzolin, Luigi

(57) **Abstract**

The device (1) has a substantially box-shaped supporting element (2) fitted to the vehicle body (3) and having a top opening (4); an intermediate element (5) housed inside the supporting element (2) at the top opening (4), and rotating with respect to the supporting element (2) about a first axis (A); and a gear lever (6) extending through the top opening (4), fitted to the intermediate element (5), and rotating with respect to the intermediate element (5) about a second axis (B) perpendicular to the first axis (A). The intermediate element (5) is cylindrical, has a longitudinal axis coincident with the first axis (A), is housed inside a first cavity (14) formed in the supporting element (2) and communicating externally at the top through the top opening (4), and has longitudinal portions of its lateral surface (5b) contiguous to longitudinal edges of the top opening (4), which are so shaped inwards of the first cavity (14) as to define respective inner surfaces (23) conjugate in shape to the cylindrical shape of the lateral surface (5b) of the intermediate element (5), and mating in sliding manner with the lateral surface (5b) of the intermediate element (5) to close the top opening (4).

## Description

The present invention relates to a vehicle transmission control device.

Control devices are known, which comprise a substantially box-shaped supporting element fitted to the vehicle floor, and having a top opening connecting the inside of the supporting element to the passenger compartment of the vehicle, and through which is loosely fitted a gear lever connected to the inside of the supporting element so as to rotate about a first and a second axis substantially perpendicular to each other, to respectively select a gear and engage/disengage the selected gear.

In addition to permitting movement of the gear lever to select and engage/disengage the gears, the top opening of the supporting element also permits transmission to the passenger compartment of the noise generated by operation of the members inside the supporting element, or generated outside and transmitted by the supporting element, such as the noise generated by the exhaust pipe normally located close to the supporting element, or noise generated outside the vehicle and reflected towards the supporting element by the road surface, thus increasing the total discernible noise level inside the passenger compartment, and so causing discomfort to the driver and passengers.

It is an object of the present invention to provide a straightforward, low-cost control device designed to minimize the noise transmitted to the passenger compartment through the top opening of the supporting element.

According to the present invention, there is provided a control device for a vehicle transmission, comprising:
- a substantially box-shaped supporting element fitted to a vehicle body and having a top opening;
- an intermediate element housed inside said supporting element at said top opening, and rotating with respect to the supporting element about a first axis; and
- a gear lever extending through said top opening of the supporting element, fitted to said intermediate element, and rotating with respect to the intermediate element about a second axis substantially perpendicular to said first axis;
   said gear lever rotating about said first and said second axis to respectively select a gear and engage/disengage a selected gear;
   characterized in that said supporting element and said intermediate element comprise respective contiguous surfaces of conjugate shape and mating in sliding manner to close said top opening.

A preferred, non-limiting embodiment of the present invention will be described by way of example with reference to the accompanying drawings, in which:
Figure 1 shows a partially sectioned front view of a control device in accordance with the present invention;
Figure 2 shows a partially sectioned side view of the Figure 1 device;
Figure 3 shows a partially sectioned top plan view of the Figure 1 device.

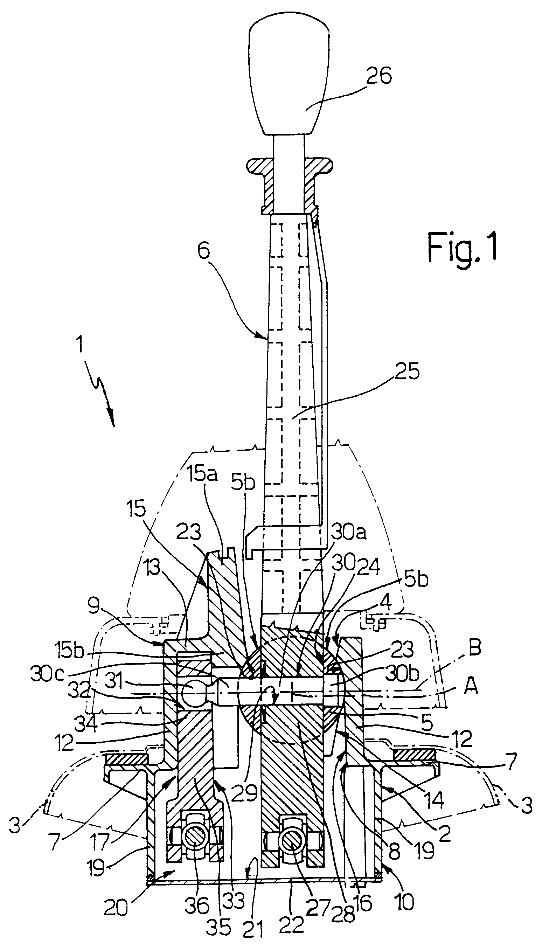

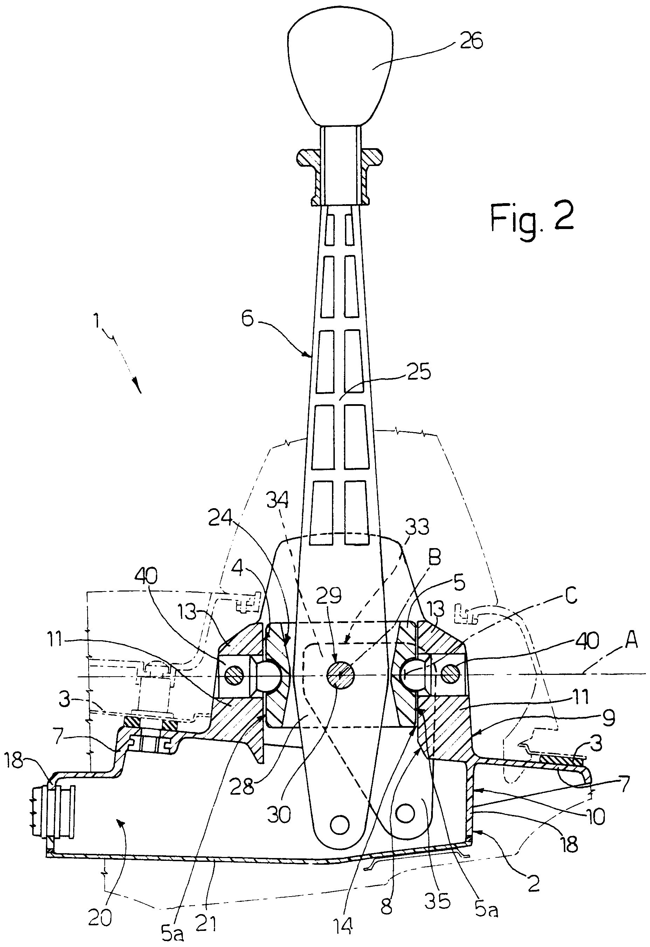

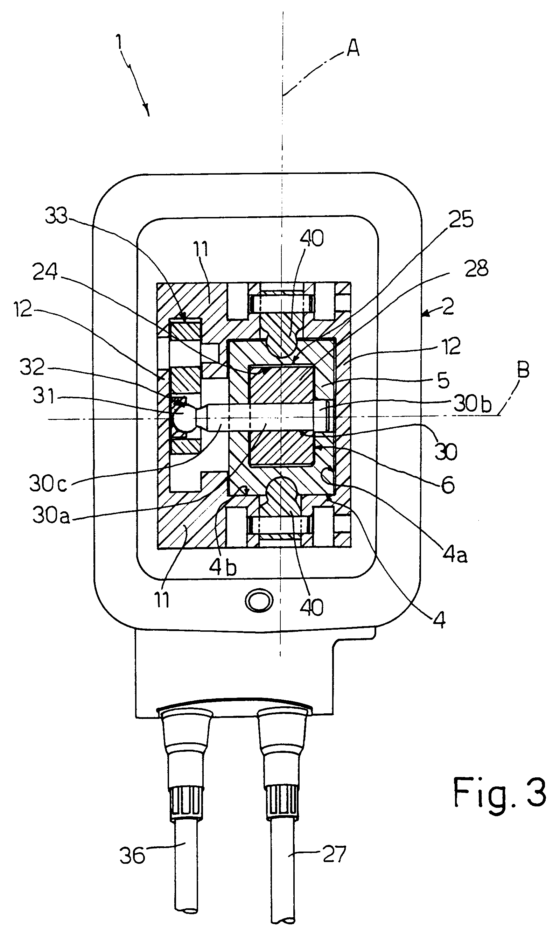

Number 1 in Figures 1, 2 and 3 indicates a control device for a vehicle transmission (not shown).

Device 1 comprises a substantially box-shaped supporting element 2 connected rigidly to the vehicle body 3, and having a substantially rectangular top opening 4 connecting the inside of supporting element 2 to the passenger compartment of the vehicle. Device 1 also comprises an intermediate element 5 housed inside supporting element 2 at top opening 4, and which rotates with respect to supporting element 2 about a first axis A substantially longitudinal with respect to the vehicle; and a gear lever 6 extending loosely through top opening 4 of supporting element 2, and which is fitted to intermediate element 5 and rotates with respect to intermediate element 5 about a second axis B perpendicular to axis A and crosswise to the vehicle.

Gear lever 6 therefore rotates with respect to supporting element 2 about axis A (fixed) and about axis B (movable with intermediate element 5) to respectively select a gear and engage/disengage the selected gear; and the operation of gear lever 6 is transmitted to the vehicle transmission (not shown) by relay elements described later on.

Supporting element 2 comprises a flange 7 for fitment to body 3, and having, at an end portion, a substantially rectangular through opening 8; a substantially tubular top body 9 extending upwards from the edges of opening 8; and a bottom body 10 extending downwards from flange 7 and elongated in the direction of axis A.

Top body 9 comprises a front and a rear wall 11 crosswise to axis A; two lateral walls 12 substantially parallel to axis A and crosswise to axis B; and a top wall 13 substantially in the form of a rectangular frame and defining top opening 4. More specifically, top opening 4 comprises a pair of longitudinal edges 4a parallel to axis A, and a pair of transverse edges 4b perpendicular to axis A; and walls 11, 12, 13 define a first cavity 14 communicating externally at the top through top opening 4.

Supporting element 2 also comprises an intermediate wall 15 located between lateral walls 12, extending crosswise to top wall 13 at a longitudinal edge 4a of top opening 4, and comprising a top portion 15a outside supporting element 2, and a bottom portion 15b housed inside first cavity 14 and defining respectively, with lateral walls 12, a first seat 16 at top opening 4, and a second seat 17 contiguous to the first.

Bottom body 10 comprises a front and a rear wall 18 crosswise to axis A; and two lateral walls 19 substantially parallel to axis A and crosswise to axis B; and walls 18, 19 define a second cavity 20 communicating with first cavity 14 through opening 8 and externally through a bottom opening 21. Bottom body 10 also comprises a cover 22 for closing bottom opening 21, and which faces flange 7 and is fitted to the bottom edges of walls 18, 19 by means of a number of screws.

Intermediate element 5 is substantially cylindrical with a longitudinal axis coincident with axis A, is housed inside first seat 16 of first cavity 14 so as to close top opening 4, is hinged to front and rear walls 11 of top body 9 by respective end pins 40 of axis A, and is of an axial length equal to the length of longitudinal edges 4a of top opening 4, and of a diameter larger than the length of transverse edges 4b of top opening 4.

More specifically, intermediate element 5 comprises end surfaces 5a facing and contiguous to respective front and rear walls 11 of top body 9; and a lateral surface 5b having longitudinal portions contiguous to longitudinal edges 4a of top opening 4, which are shaped inwards of first cavity 14 to define respective inner surfaces 23 conjugate in shape to the cylindrical shape of lateral surface 5b of intermediate element 5, and which mate in sliding manner with lateral surface 5b to close top opening 4.

Closing top opening 4 therefore provides for reducing the noise generated inside supporting element 2, or generated outside and transmitted to the passenger compartment of the vehicle through top opening 4.

Intermediate element 5 also comprises a through opening 24 extending perpendicular to axes A and B, and having, in a plane through axes A and B, a rectangular profile elongated in the direction of axis A.

Gear lever 6 comprises a rod 25 extending through opening 24 in intermediate element 5, and the top end of which, outside device 1 and inside the passenger compartment of the vehicle, is fitted with a knob 26, and the bottom end of which, housed inside bottom body 10, is fitted with a gear engagement/disengagement control cable 27. Rod 25 also comprises a portion 28 housed in sliding manner with a small amount of lateral clearance inside opening 24 of intermediate element 5, and having a through hole 29, of axis B, defining a seat for a hinge pin 30 permitting rotation with respect to intermediate element 5.

Pin 30 comprises an intermediate portion 30a engaging hole 29 in gear lever 6 interferentially, so as to be connected rigidly to gear lever 6; a first axial end portion 30b housed inside hole 29; and a second axial end portion 30c projecting axially outwards of intermediate element 5 and comprising a spherical head 31 engaging in radially slack manner a hole 32, of axis B, formed in a relay lever 33 housed partially inside second seat 17.

Relay lever 33 is substantially in the form of a quadrant, and is hinged to the contiguous lateral wall 12 of top body 9 about a third axis C perpendicular to axis A, parallel to axis B, and coplanar with axes A and B.

Relay lever 33 comprises a first arm 34 housed inside second seat 17, extending parallel to axis A, and in which is formed hole 32 engaged by spherical head 31; and a second arm 35 extending substantially downwards, and to the bottom end of which, housed inside bottom body 10, is hinged a gear selection control cable 36.

Operation of device 1 is known, and therefore described only briefly.

To select a gear, knob 26 of gear lever 6 is moved laterally, so that gear lever 6 and intermediate element 5 rotate about axis A, and relay lever 33 is rotated about axis C to activate gear selection control cable 36.

To engage the gear, on the other hand, knob 26 of gear lever 6 is moved backwards or forwards, so that gear lever 6 and gear engagement/disengagement control cable 27 are rotated about axis B.

The particular shape of inner surfaces 23 contiguous to portions of lateral surface 5b of intermediate element 5, and the way in which they mate in sliding manner with lateral surface 5b to close top opening 4, provide for greatly reducing the noise generated inside or outside the supporting element and transmitted to the passenger compartment through top opening 4, thus greatly reducing discomfort to the driver and passengers.

The noise level inside the passenger compartment is further reduced by cover 22, which provides for soundproofing the inner cavity of supporting element 2.

Clearly, changes may be made to device 1 as described and illustrated herein without, however, departing from the scope of the present invention.

## Claims

1. A control device (1) for a vehicle transmission, comprising:
- a substantially box-shaped supporting element (2) fitted to a vehicle body (3) and having a top opening (4);
- an intermediate element (5) housed inside said supporting element (2) at said top opening (4), and rotating with respect to the supporting element (2) about a first axis (A); and
- a gear lever (6) extending through said top opening (4) of the supporting element (2), fitted to said intermediate element (5), and rotating with respect to the intermediate element (5) about a second axis (B) substantially perpendicular to said first axis (A);
said gear lever (6) rotating about said first and said second axis (A, B) to respectively select a gear and engage/disengage a selected gear;
characterized in that said supporting element (2) and said intermediate element (5) comprise respective contiguous surfaces (5a, 5b, 23) of conjugate shape and mating in sliding manner to close said top opening (4).

2. A device as claimed in Claim 1, characterized in that said intermediate element (5) is housed inside a first cavity (14) formed in said supporting element (2) and communicating externally at the top through said top opening (4); said intermediate element (5) being substantially cylindrical with a longitudinal axis coincident with said first axis (A), and being so located as to close said top opening (4).

3. A device as claimed in Claim 2, characterized in that said top opening (4) is defined by a pair of longitudinal edges (4a) parallel to said first axis (A), and by a pair of transverse edges (4b) substantially perpendicular to said first axis (A); said longitudinal edges (4a) being so shaped inwards of said first cavity (14) as to define respective inner surfaces (23) conjugate in shape to the cylindrical shape of the lateral surface (5b) of the intermediate element (5).

4. A device as claimed in any one of the foregoing Claims, characterized in that said intermediate element (5) comprises a through opening (24) extending in a direction crosswise to said first and second axes (A, B), having a substantially rectangular profile in a plane through said first and second axes (A, B), and engaged with a small amount of lateral clearance by said gear lever (6).

5. A device as claimed in any one of the foregoing Claims, characterized in that said supporting element (2) comprises a bottom opening 21 permitting the assembly of internal members; said bottom opening (21) being closed by a cover (22).
